# EUROPÄISCHE PATENTSCHRIFT

(11) **EP 0 838 664 B1**
(45) Veröffentlichungstag und Bekanntmachung des Hinweises auf die Patenterteilung: **06.02.2002**
(21) Anmeldenummer: 97118429.6
(22) Anmeldetag: 23.10.1997
(51) Int. Cl.: G01B 11/04, G01B 21/06, G01D 5/26, G01B 7/04

(54) **Verfahren und Vorrichtung zur Lagekontrolle von mit einer Markierung versehenen Buchblöcken**
Procedure and device to control the position of books provided with a marking
Dispositif et procédé pour contrôler la position de livres pourvus d'un marquage

(30) Priorität: 26.10.1996 DE 19644545
(43) Veröffentlichungstag der Anmeldung: 29.04.1998
(73) Patentinhaber: WST Steuerungstechnik GmbH, 32339 Espelkamp (DE)
(72) Erfinder: Wellpott, Ralf, 32369 Rahden (DE)
(74) Vertreter: Braun, Dieter, Dipl.-Ing.

(56) Entgegenhaltungen:
- DE-U- 29 518 160
- US-A- 3 891 324
- US-A- 4 578 052
- US-A- 5 410 157
- PATENT ABSTRACTS OF JAPAN vol. 006, no. 265 (P-165), 24. Dezember 1982 (1982-12-24) & JP 57 161615 A (TOYO UNPANKI KK), 5. Oktober 1982 (1982-10-05)

## Beschreibung

Die Erfindung bezieht sich auf ein Verfahren zur Lagekontrolle von in einer Zuführeinrichtung transportierten Buchblöcken, an deren Rücken jeweils ein Verstärkungsstreifen angebracht ist, der mit einer im wesentlichen quer zur Laufrichtung ausgebildeten Markierung versehen ist.

Es hat sich als sehr zweckmäßig erwiesen, daß die Verstärkungsstreifen von Buchblöcken mit einer quer verlaufenden, in Bezug auf die Buchblockkanten asymmetrisch angeordneten Markierung versehen sind, die es möglich macht, vor dem Anbringen des Einbanddeckels die seitenrichtige Lage des Buchblocks zu erkennen, wenn dieser in einer Zuführeinrichtung einer Einhängemaschine transportiert wird.

Es hat sich als sehr schwierig herausgestellt, die auf den Buchblöcken angebrachten Markierungen mittels eines Sensors abzutasten. Dies rührt daher, daß das für die Verstärkungsstreifen verwendete Papier, um gut verleimbar zu sein, saugfähig sein muß und daher eine stark und unregelmäßig strukturierte Oberfäche aufweist. Eine solche Oberfläche hat jedoch einen hohen Lichtstreugrad, wobei der Reflektionswinkel nicht vorhersehbar ist. Daher weist die Markierung zu der strukturierten Oberfläche der Verstärkungsstreifen einen geringen Kontrast auf. Dies wird noch dadurch verstärkt, daß die Verstärkungsstreifen selten eine rein weiße Oberfläche haben, sondern vielmehr in der Regel aus Markierungsgründen in unterschiedlichen Farbtönen eingesetzt werden, weshalb auch die Markierungen in unterschiedlichen Farben aufgebracht werden. Hinzu kommt, daß das Papier unter Umständen hellere und dunklere Bereiche aufweist und daß z. B. auch Fremdlicht, etwa bei Sonneneinstrahlung, zu einer Verfälschung der Signale eines Sensors führen kann.

Eine sehr intensive Einfärbung der Markierung kann jedoch nicht vorgenommen werden, da dann die Farbe auf der Rückseite des saugfähigen Verstärkungsstreifens durchschlagen würde und im Innern des fertigen Buchdeckels die Markierung sichtbar wäre.

Ein Sensor in Form einer einzigen Photozelle liefert somit kein verläßliches Meßergebnis, da die Photozelle unter Umständen bereits dann ansprechen würde, wenn, wie oben beschrieben, generell wechselnde Bedingungen auftreten, beispielsweise aufgrund von Differenzen im Reflektionsverhalten des Papiers, von Helligkeitsschwankungen und Fremdlicht. Daher erfolgte bisher die Überwachung mittels Sichtkontrolle der Markierungen durch eine Person.

Der Erfindung liegt die Aufgabe zugrunde, ein Verfahren zur Verfügung zu stellen, daß eine sichere und kostengünstige opto-elektronische Überwachung der richtigen Lage der Buchblöcke in einer Zuführeinrichtung ermöglicht.

Diese Aufgabe wird erfindungsgemäß durch die Merkmale des Anspruchs 1 gelöst. Von zwei in Laufrichtung der Buchblöcke hintereinander angeordneten Photozellen, die miteinander abgeglichen sind, wird jeweils ein analoges Spannungssignal in Abhängigkeit von Licht erzeugt, das von dem Verstärkungsstreifen bzw. der Markierung reflektiert wird, wenn sich ein Buchblock an den Photozellen entlangbewegt. Dabei tritt der Buchblock, nachdem er in den Abtastbereich der in Laufrichtung gesehen ersten Photozelle eingetreten ist, auch in den Abtastbereich der zweiten Photozelle ein, bevor die Markierung den Abtastbereich der ersten Photozelle verläßt. Die analogen Signale werden in digitale Signale umgewandelt, die nur einen von zwei möglichen Werten annehmen können. Mittels eines Mikroprozessors werden zwei Differenzsignale erzeugt, die durch Subtraktion des digitalen Signals der einen Photozelle von dem digitalen Signal der anderen, bzw. umgekehrt gebildet werden. Die Differenzsignale weisen jeweils einen Abschnitt mit dem höheren digitalen Wert auf, der daraus resultiert, daß die Markierung nacheinander die Abtastbereiche der beiden Photozellen durchlaufen hat und daher die beiden analogen und somit auch die beiden digitalen Signale zumindest teilweise während dieser Phasen unterschiedliche Werte hatten. Entsprechendes gilt auch für die Randbereiche des Buchblocks, so daß zeitlich vor und hinter den von den Markierungen herrührenden Signalabschnitten jeweils ein von den Randbereichen herrührender Signalabschnitt mit dem höheren digitalen Wert liegt. Der Mikroprozessor wertet die Muster der Differenzsignale aus, um die Position der Markierung auf dem Verstärkungsstreifen zu bestimmen.

Die Positionsbestimmung der Markierung kann auf verschiedene Art erfolgen, wobei die Erfindung von der Erkenntnis ausgeht, daß es bei der Überwachung der Blöcke lediglich darauf ankommt, zu erkennen, auf welcher Seite der Blöcke sich die Markierung befindet, eine exakt genaue Auswertung der Position der Markierung jedoch nicht erforderlich ist.

Eine einfache Möglichkeit der Positionsbestimmung besteht darin, diese ausschließlich auf der Grundlage des zeitlichen Abstands der von der Markierung herrührenden Differenzsignalabschnitte zu den von den Randbereichen herrührenden Differenzsignalabschnitten vorzunehmen. Dies ist möglich, wenn die Geschwindigkeit der Zuführeinrichtung über die Zeitdauer, während der ein Buchblock die Photozellen passiert, im wesentlichen konstant ist, was in der Regel der Fall ist.

Vorzugsweise tritt der Buchblock in den Abtastbereich der zweiten Photozelle ein, bevor die Markierung in den Abtastbereich der ersten Photozelle eintritt. Denn dadurch ist gewährleistet, daß jeweils die beiden von der Markierung herrührenden Differenzsignalabschnitte und die beiden von den Randbereichen des Buchblocks herrührenden Differenzsignalabschnitte dieselbe Zeitdauer aufweisen.

Es kann vorgesehen sein, daß die Markierung den Abtastbereich der ersten Photozelle verläßt, bevor die Markierung in den Abtastbereich der zweiten Photozelle eintritt, um eine möglichst große Zeitdauer der von der Markierung herrührenden Differenzsignalabschnitte zu erhalten.

Günstig ist, wenn der zeitliche Abstand der von der Markierung herrührenden Differenzsignalabschnitte gering ist im Verhältnis zu dem zeitlichen Abstand der von den Randbereichen herrührenden Differenzsignalabschnitte. Denn dadurch wird erreicht, daß eine Veränderung der generellen Bedingungen, die die auf die Photozellen treffende Lichtmenge beeinflussen, sich in der Regel auf beide Photozellen gleichzeitig auswirkt. Dadurch verändern sich die Einzelsignale der Photozellen gleichermaßen, so daß sich diese Veränderung der generellen Bedingungen nicht im Differenzsignal niederschlägt.

Vorzugsweise ist der zeitliche Abstand der von der Markierung herrührenden Differenzsignalabschnitte, gemessen von Flanke zu Flanke, etwa gleich der Dauer eines einzelnen dieser Signalabschnitte.

Die Vorrichtung zur Durchführung des oben beschriebenen Sensorverfahrens ist erfindungsgemäß dadurch gekennzeichnet, daß sie einen Lagekontrollsensor mit den zwei in Laufrichtung der Buchblöcke hintereinander angeordneten Photozellen aufweist, deren Abtastbereiche auf den Buchblöcken einen von Rand zu Rand gemessenen Abstand voneinander aufweisen, der kleiner als die Breite der Markierung und der geringere der beiden Abstände zwischen Markierungsrand und Buchblockkante zusammen ist, ferner zwei Analog-Digital-Wandler, die eingangsseitig jeweils mit einer der Photozellen und ausgangsseitig mit einem Mikroprozessor verbunden sind, der aus den digitalen Signalen der Photozellen die Differenzsignale erzeugt und aus diesen die Position der Markierung auf dem Verstärkungsstreifen bestimmt.

Es ist vorteilhaft, wenn der von Mitte zu Mitte gemessene Abstand der Photozellen kleiner ist als der geringere der beiden Abstände zwischen Markierungsrand und Buchblockkante, damit wie oben beschrieben der Buchblock in den Abtastbereich der zweiten Photozelle eintritt, bevor die Markierung in den Abtastbereich der ersten Photozelle eintritt.

Ferner kann vorgesehen sein, daß der von Rand zu Rand gemessene Abstand der Abtastbereiche auf den Buchblöcken größer als die Breite der Markierung ist, so daß die Markierung den Abtastbereich der ersten Photozelle verläßt, bevor die Markierung in den Abtastbereich der zweiten Photozelle eintritt.

In der Praxis hat sich für den von Rand zu Rand gemessenen Abstand der Photozellen voneinander ein Wert von 8 mm als günstig erwiesen.

Das erfindungsgemäße Verfahren zeichnet sich dadurch aus, daß unerwünschte Lichtmengenveränderungen, die von beiden Photozellen gleichzeitig erfaßt werden, aufgrund der Differenzauswertung kein Signal erzeugen. Somit spricht das System nicht auf störende Einflüsse an, die beide Photozellen gleichzeitig betreffen. Erst wenn z. B. der vordere Randbereich des Buchblocks oder die Markierung in den Abtastbereich der ersten Photozelle gelangt und noch nicht von der zweiten Photozelle erfaßt ist, entsteht ein Ausschlag des Differenzsignals. Die Ausschaltung unerwünschter Einflüsse ist umso effektiver, je enger der Abstand der beiden Photozellen ist. Die von den Markierungen herrührenden Differenzsignalabschnitte werden jedoch zeitlich kürzer, wenn der von Rand zu Rand gemessene Abstand der Abtastbereiche auf dem Buchblock geringer wird als die Breite der Markierung.

Somit ist das Verfahren unabhängig von Geschwindigkeitsschwankungen der Zuführeinrichtung, die nur über Zeitbereiche auftreten, die groß sind im Verhältnis zu der Zeit, die ein Buchblock benötigt, um die Photozellen zu passieren. Da die Geschwindigkeit des Vorschubs der Buchblöcke in der Einhängemaschine, in der die Abtastung mittels des Lagekontrollsensors erfolgt, eine derartige Gleichmäßigkeit aufweist, ist das Verfahren unabhängig von den Geschwindigkeitsschwankungen, wie sie in der Praxis auftreten. Daher kann bei dem erfindungsgemäßen Verfahren auf eine Geschwindigkeitsmessung, die z. B. einen Drehgeber und eine aufwendige Auswertung seiner Signale erfordern würde, verzichtet werden.

Im folgenden wird ein Ausführungsbeispiel der Erfindung anhand von Zeichnungen näher erläutert. Es zeigen:
Figur 1, eine Vorrichtung und einen Teilabschnitt eines Transportbandes einer Zuführeinrichtung mit einem Buchblock in schematischer Darstellung;
Figur 2, Signalverläufe bei der Anordnung nach Figur 1.

Innerhalb einer Einhängemaschine (nicht in ihrer Gesamtheit gezeigt), die zur Anbringung von Einbanddeckeln dient, wird ein Buchblock 1 auf einer Zuführeinrichtung 2, hier ein Transportband, transportiert. Am Rücken des Buchblocks 1 ist ein Verstärkungsstreifen 3 angebracht. Der Verstärkungsstreifen 3 ist mit einer Strichmarkierung 4 versehen, die quer zu der durch einen Pfeil gekennzeichneten Laufrichtung des Transportbandes der Zuführeinrichtung 2 verläuft.

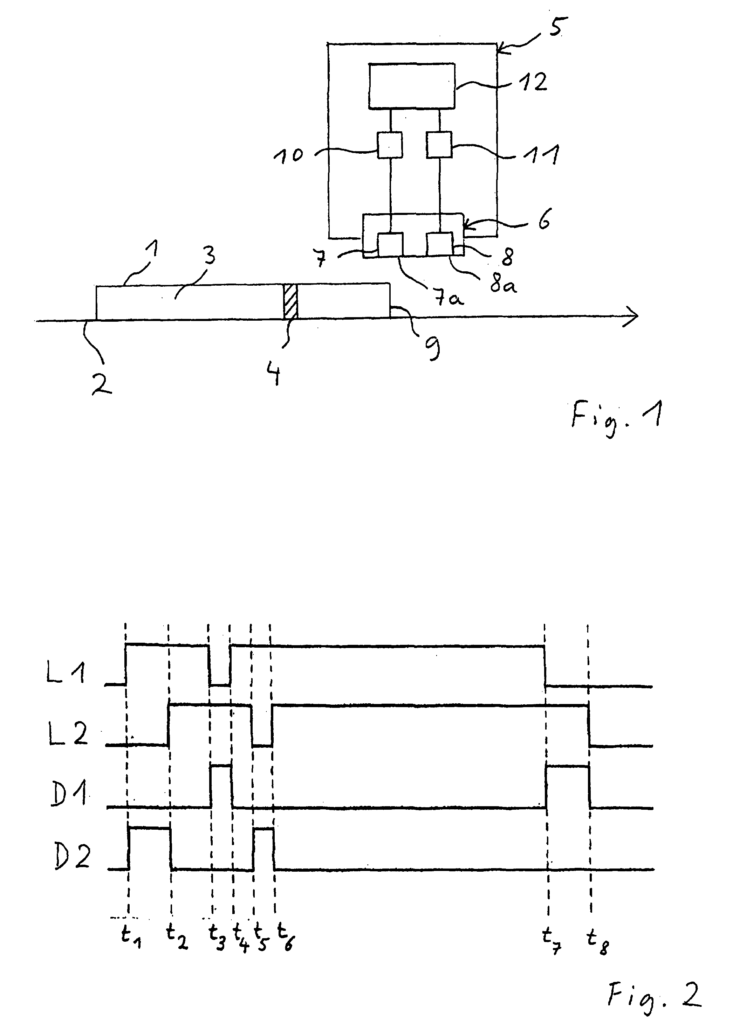

Eine Vorrichtung 5 zur Lagekontrolle der Buchblöcke auf dem Transportband der Zuführeinrichtung 2 weist einen Lagekontrollsensor 6 mit zwei in Laufrichtung hintereinander angeordneten Photozellen 7, 8 auf, neben denen symmetrisch jeweils zwei Lichtquellen (nicht gezeigt) angeordnet sein können. Der Lagekontrollsensor 6 ist relativ zu der Zuführeinrichtung 2 so positioniert, daß die Photozellen 7,8 seitlich neben den vorbeilaufenden Buchblockrücken angeordnet sind (In Figur 1 sind zur Vermeidung einer sich überlagernden Darstellung die Photozellen oberhalb der Buchblockrücken gezeichnet) und die Einfallsöffnungen 7a, 8a der Photozellen 7, 8 parallel zum Rücken des Buchblocks 1 und auf einer Höhe mit diesem ausgerichtet sind. Der Abstand der Photozellen 7,8, gemessen von Rand zu Rand, beträgt vorzugsweise 8 mm, während die Abtastbereiche der Photozellen 7, 8 einen etwas geringeren Abstand haben, aber um mehr als die Breite der Markierung 4 auseinanderliegen. Dazu müssen der Öffnungswinkel der Photozellen, bzw. der kürzeste Abstand ihrer Einfallsöffnungen 7a, 8a, von den Verstärkungsstreifen 3 adäquat gewählt sein. Vorzugsweise beträgt dieser Abstand 25 mm ± 3 mm. Ferner ist bei der Anordnung der Abtastbereiche gewährleistet, daß beide Photozellen 7,8 die in Laufrichtung gesehen vordere Buchblockkante 9 erfassen, bevor die Photozelle 7 die Markierung 4 erfaßt.

Ferner weist die Vorrichtung 5 zwei Analog-Digital-Wandler 10, 11 auf, die eingangsseitig jeweils mit einer der Photozellen 7, 8 und ausgangsseitig mit einem Mikroprozessor 12 der Vorrichtung 5 verbunden sind.

Wenn der Buchblock 1 den Lagekontrollsensor 6 passiert, ergeben sich folgende, in Figur 2 dargestellte Signalverläufe. Zunächst tritt der Buchblock 1 in den Abtastbereich der Photozelle 7 ein, die ein analoges Spannungssignal (nicht gezeigt) erzeugt. Dieses analoge Signal wird stärker, wenn sich die vordere Buchblockkante 9 weiter in den Abtastbereich der Photozelle 7 hineinbewegt. Das Signal wird durch den Analog-Digital-Wandler 10 in ein digitales Signal L1 umgewandelt, das nur einen von zwei verschiedenen Werten annehmen kann, die im folgenden mit Null und Eins bezeichnet werden. Wenn die vordere Buchblockkante 9 in den Abtastbereich der Photozelle 7 eintritt, springt somit das digitale Signal L1 von Null auf Eins.

Dieser Zeitpunkt ist in Figur 2 mit t₁ bezeichnet. Entsprechendes geschieht, wenn die Buchblockkante 9 in den Abtastbereich der Photozelle 8 eintritt, die ebenfalls ein analoges Spannungssignal erzeugt, das von dem Analog-Digital-Wandler 11 in ein digitales Signal L2 umgewandelt wird. Zum Zeitpunkt t₂ springt-das Signal L2 somit ebenfalls von Null auf Eins. Erst danach, zum Zeitpunkt t₃, erreicht die Markierung 4 den Abtastbereich der Photozelle 7, wodurch das Signal L1 wieder den Wert Null annimmt. Zum Zeitpunkt t₄ verläßt die Markierung 4 den Abtastbereich der Photozelle 7, so daß das Signal L1 wieder den Wert Eins annimmt Anschließend tritt die Markierung 4, zum Zeitpunkt t₅, in den Abtastbereich der Photozelle 8 ein und verläßt diesen zum Zeitpunkt t₆, wobei das Signal L2 ebenfalls, solange sich die Markierung 4 im Abtastbereich befindet, den Wert Null hat. Zum Zeitpunkt t₇ verläßt der Buchblock 1 den Abtastbereich der Photozelle 7, zum Zeitpunkt t₈ den der Photozelle 8, sodaß die Signale L1 und L2 jeweils zu diesen Zeitpunkten wieder den Wert Null annehmen.

Die digitalen Signale L1 und L2 werden vom Mikroprozessor 12 ausgewertet, indem er zunächst zwei digitale Differenzsignale D1 und D2 bildet, die ebenfalls nur einen der beiden Werte Null und Eins annehmen können. Das Signal D1 wird durch Subtraktion des Signals L1 von dem Signal L2 gebildet, das Signal D2 durch Subtraktion des Signals L2 von dem Signal L1. Somit weist eines der beiden Differenzsignale D1 und D2 nur dann den Wert Eins auf, wenn die Signale L1 und L2 voneinander abweichen. Wenn die Signale L1 und L2 sich hingegen gleichzeitig verändern, beispielsweise aufgrund eines Störeinflusses, ruft dies keine Änderung der Differenzsignale hervor.

Die Differenzsignale sind virtuell gebildete Signale, die den Photozellen willkürlich zugeordnet sind. Es kann somit auch eine umgekehrte Zuordnung realisiert werden. Aus dem Muster der beiden Differenzsignale D1 und D2 kann der Mikroprozessor die Position der Markierung 4 auf dem Rücken des Buchblocks 1, wie oben ausgeführt, bestimmen und diesen damit auf seine richtige Lage hin überprüfen.

Die Vorrichtung 5 kann so ausgelegt sein, daß bei fehlender Markierung 4 eine Störmeldung erfolgt und bei falscher Lage der Markierung 4 und somit falscher Lage des Buchblocks 1 ein Fehler signalisiert wird. Dabei kann vorgesehen sein, daß sich Art und Dauer der beiden Meldungen durch Umsetzen von Jumpern unterschiedlich konfigurieren lassen.

## Patentansprüche

1. Verfahren zur Lagekontrolle von in einer Zuführeinrichtung (2) transportierten Buchblöcken (1), an deren Rücken jeweils ein Verstärkungsstreifen (3) angebracht ist, der mit einer im wesentlichen quer zur Laufrichtung ausgebildeten Markierung (4) versehen ist, **dadurch gekennzeichnet, daß**
- von einer ersten und einer zweiten in Laufrichtung der Buchblöcke (1) hintereinander angeordneten Photozelle (7, 8) jeweils ein analoges Spannungssignal erzeugt wird, so daß, wenn sich ein Buchblock (1) an den Photozellen (7, 8) entlangbewegt, das Spannungssignal im wesentlichen in Abhängigkeit von Licht entsteht, das von dem Verstärkungsstreifen (3), bzw. der Markierung (4) reflektiert wird, und derart, daß der Buchblock (1) in den Abtastbereich der zweiten Photozelle (8) eintritt, bevor die Markierung (4) den Abtast-bereich der ersten Photozelle (7) verläßt,
- die analogen Signale in digitale Signale (L1, L2) umgewandelt werden, die nur einen von zwei möglichen Werten haben,
- ein erstes Differenzsignal (D1) durch Subtraktion des digitalen Signals (L1) der ersten Photozelle (7) von dem Signal (L2) der zweiten Photozelle (8) und ein zweites Differenzsignal (D2) durch Subtraktion des digitalen Signals (L2) der zweiten Photozelle (8) von dem Signal (L1) der ersten Photozelle (7) gebildet wird, wobei die zeitlichen Verläufe der Differenzsignale (D1, D2) zusammen zwei Abschnitte mit dem höheren digitalen Wert aufweisen, die von den Randbereichen des Buchblocks (1) herrühren, und zwischen diesen Abschnitten zwei weitere Abschnitte mit dem höheren digitalen Wert aufweisen, die von der Markierung (4) herrühren, und
- mit Hilfe der Differenzsignalmuster die Position der Markierung (4) auf dem Verstärkungsstreifen (3) bestimmt wird.

2. Verfahren nach Anspruch 1, **dadurch gekennzeichnet, daß** der Buchblock (1) in den Abtastbereich der zweiten Photozelle (8) eintritt, bevor die Markierung (4) in den Abtastbereich der ersten Photozelle (7) eintritt.

3. Verfahren nach Anspruch 1 oder 2, **dadurch gekennzeichnet, daß** die Markierung (4) den Abtastbereich der ersten Photozelle (7) verläßt, bevor die Markierung (4) in den Abtastbereich der zweiten Photozelle (8) eintritt.

4. Verfahren nach einem der vorhergehenden Ansprüche, **dadurch gekennzeichnet, daß** die Position der Markierung (4) auf dem Verstärkungsstreifen (3) ausschließlich aus dem zeitlichen Abstand der von der Markierung (4) herrührenden Differenzsignalabschnitte zu den von den Randbereichen herrührenden Differenzsignalabschnitten bestimmt wird.

5. Verfahren nach einem der vorhergehenden Ansprüche, **dadurch gekennzeichnet, daß** der zeitliche Abstand der von der Markierung (4) herrührenden Differenzsignalabschnitte gering ist im Verhältnis zu dem zeitlichen Abstand der von den Randbereichen herrührenden Differenzsignalabschnitte.

6. Verfahren nach Anspruch 5, **dadurch gekennzeichnet, daß** der zeitliche Abstand der von der Markierung (4) herrührenden Differenzsignalabschnitte, gemessen von Flanke zu Flanke, etwa gleich der Dauer eines einzelnen dieser Signalabschnitte ist.

7. Vorrichtung zur Durchführung des Verfahrens nach einem der vorhergehenden Ansprüche, **dadurch gekennzeichnet, daß** diese einen Lagekontrollsensor (6) mit den zwei in Laufrichtung der Buchblöcke (1) hintereinander angeordneten Photozellen (7, 8) aufweist, deren Abtastbereiche auf den Buchblöcken (1) einen von Rand zu Rand gemessenen Abstand voneinander aufweisen, der kleiner als die Breite der Markierung (4) und der geringere der beiden Abstände zwischen Markierungsrand und Buchblockkante zusammen ist, ferner zwei Analog-Digital-Wandler (10, 11), die eingangsseitig jeweils mit einer der Photozellen (7, 8) und ausgangsseitig mit einem Mikroprozessor (12) verbunden sind, der aus den digitalen Signalen (L1, L2) der Photozellen (7, 8) die Differenzsignale (D1, D2) erzeugt und aus diesen die Position der Markierung (4) auf dem Verstärkungsstreifen (3) bestimmt.

8. Vorrichtung nach Anspruch 7, **dadurch gekennzeichnet, daß** der von Mitte zu Mitte gemessene Abstand der Photozellen (7,8) kleiner ist als der geringere der beiden Abstände zwischen Markierungsrand und Buchblockkante.

9. Vorrichtung nach Anspruch 7 oder 8, **dadurch gekennzeichnet, daß** der von Rand zu Rand gemessene Abstand der Abtastbereiche auf den Buchblöcken (1) größer als die Breite der Markierung (4) ist.

10. Vorrichtung nach einem der Ansprüche 7 bis 9, **dadurch gekennzeichnet, daß** die Photozellen (7, 8) einen von Rand zu Rand gemessenen Abstand von 8 mm voneinander haben.

## Claims

1. A method of checking the position of inner books (1) conveyed on a supply device (2), a reinforcing strip (3) being attached to the backs of the inner books and provided with marking (4) approximately at right angles to the direction of advance, **characterised in that**
- a first and a second photocell (7, 8) disposed one behind the other in the direction of advance of the inner books (1) each generate an analog voltage signal so that when an inner book (1) moves along the photocells (7, 8) the voltage signal occurs substantially in dependence on light reflected by the reinforcing strip (3) or the marking (4), such that the inner book (1) enters the scanning region of the second photocell (8) before the marking (4) leaves the scanning region of the first photocell (7),
- the analog signals are converted into digital signals (L1, L2) which have only one of two possible values,
- a first differential signal (D1) is obtained by subtracting the digital signal (L1) from the first photocell (7) from the signal (L2) from the second photocell (8) and a second differential signal (D2) is obtained by subtracting the digital signal (L2) from the second photocell (8) from the signal (L1) from the first photocell (7), wherein the time sequences of the differential signals (D1, D2) together have two portions at the higher digital value originating from the edge regions of the inner book (1) and two other portions between the first-mentioned portions having the higher digital value and originating from the marking (4), and
- the pattern of the differential signals is used to determine the position of the marking (4) on the reinforcing strips (3).

2. A method according to claim 1, **characterised in that** the inner book (1) enters the scanning region of the second photocell (8) before the marking (4) enters the scanning region of the first photocell (7).

3. A method according to claim 1 or claim 2, **characterised in that** the marking (4) leaves the scanning region of the first photocell (7) before the marking (4) enters the scanning region of the second photocell (8).

4. A method according to any of the preceding claims, **characterised in that** the position of the marking (4) on the reinforcing strip (3) is exclusively determined from the time interval between the portions of the differential signal originating from the marking (4) and the portions of the differential signal originating from the edge regions.

5. A method according to any of the preceding claims, **characterised in that** the time interval between the differential signal portions originating from the marking (4) is small compared with the time interval between the differential signal portions originating from the edge regions.

6. A method according to claim 5, **characterised in that** the time interval between the differential signal portions originating from the marking (4), measured from flank to flank, is about equal to the duration of a single said signal portion.

7. A device for working the method according to any of the preceding claims, **characterised in that** it comprises a position monitoring sensor (6) with two photocells (7, 8) disposed one behind the other in the direction of advance of the inner books (1), the scanning regions of the photocells on the inner books (1) being separated by a distance, measured from edge to edge, which is less than the width of the marking (4) together with the smaller of the two distances between the marking edge and the inner-book edge, and the device also comprises two analog-digital converters (10, 11) having inputs connected to a respective photocell (7, 8) and outputs connected to a microprocessor (12) which generates the differential signals (D1, D2) from the digital signals (L1, L2) from the photocells (7, 8) and uses them to determine the position of the marking (4) on the reinforcing strips (3).

8. A device according to claim 7, **characterised in that** the measured centre-to-centre distance between the photocells (7, 8) is less than the smaller of the two distances between the marking edge and the inner-book edge.

9. A device according to claim 7 or claim 8, **characterised in that** the measured edge-to-edge distance between the scanning regions on the inner books (1) is greater than the width of the marking (4).

10. A device according to any of claims 7 to 9, **characterised in that** the photocells (7, 8) have a measured edge-to-edge distance of 8 mm from one another.

## Revendications

1. Procédé pour contrôler la position de livres non reliés (1) transportés dans une installation d'amenée (2) et au dos desquels est appliquée une bande de renforcement (3) pourvue d'une marque (4) réalisée sensiblement transversalement à la direction de déplacement, **caractérisé en ce que** :
- un signal analogique de tension est produit respectivement par une première et une seconde cellules photoélectriques (7, 8) disposées l'une derrière l'autre dans le sens de déplacement des livres non reliés (1) de sorte que, lorsqu'un livre non relié (1) passe le long des cellules photoélectriques (7, 8), le signal de tension se forme sensiblement en fonction de la lumière réfléchie par la bande de renforcement (3) ou par la marque (4) et de manière que le livre non relié (1) pénètre dans la zone d'exploration de la seconde cellule photoélectrique (8) avant que la marque (4) quitte la zone d'exploration de la première cellule photoélectrique (7) ;
- les signaux analogiques sont convertis en signaux numériques (L1, L2) qui ne peuvent prendre que deux valeurs exclusives l'une de l'autre ;
- un premier signal différentiel (D1) est formé en retranchant le signal numérique (L1) de la première cellule photoélectrique (7) du signal (L2) de la seconde cellule photoélectrique (8) et un second signal différentiel (D2) est formé en retranchant le signal numérique (L2) de la seconde cellule photoélectrique (8) du signal (L1) de la première cellule photoélectrique (7), les courbes des signaux différentiels (D1, D2) en fonction du temps considérées ensemble comportant deux sections, ayant la valeur numérique la plus élevée, dues aux bordures du livre non relié (1) et, entre ces sections, deux autres sections, ayant la valeur numérique la plus élevée, dues à la marque (4) ; et
- la position de la marque (4) sur la bande de renforcement (3) est déterminée à l'aide du signal différentiel type.

2. Procédé selon la revendication 1, **caractérisé en ce que** le livre non relié (1) pénètre dans la zone d'exploration de la seconde cellule photoélectrique (8) avant que la marque (4) pénètre dans la zone d'exploration de la première cellule photoélectrique (7).

3. Procédé selon la revendication 1 ou 2, **caractérisé en ce que** la marque (4) quitte la zone d'exploration de la première cellule photoélectrique (7) avant que la marque (4) pénètre dans la zone d'exploration de la seconde cellule photoélectrique (8).

4. Procédé selon l'une quelconque des revendications précédentes, **caractérisé en ce que** la position de la marque (4) sur la bande de renforcement (3) est exclusivement déterminée à partir du laps de temps entre les sections de signal différentiel dues à la marque (4) et les sections de signal différentiel dues aux bordures.

5. Procédé selon l'une quelconque des revendications précédentes, **caractérisé en ce que** le laps de temps entre les sections de signal différentiel dues à la marque (4) est faible par rapport au laps de temps entre les sections de signal différentiel dues aux bordures.

6. Procédé selon la revendication 5, **caractérisé en ce que** le laps de temps entre les sections de signal différentiel dues à la marque (4), mesuré de flanc à flanc, est à peu près égal à la durée d'une seule de ces sections de signal.

7. Dispositif de mise en oeuvre du procédé selon l'une quelconque des revendications précédentes, **caractérisé en ce que** ledit dispositif comporte un capteur de contrôle de position (6) muni des deux cellules photoélectriques (7, 8) disposées l'une derrière l'autre dans le sens de déplacement des livres non reliés (1) et dont les zones d'exploration sur les livres non reliés (1) sont séparées l'une de l'autre, de bord à bord, d'une distance inférieure à la largeur de la marque (4) et à la plus petite des distances entre bord de marque et arête de livre non relié considérées ensemble, ainsi que deux convertisseurs analogique-numérique (10, 11) qui sont reliés, côté entrée, respectivement à l'une des cellules photoélectriques (7, 8) et, côté sortie, à un microprocesseur (12) qui produit à partir des signaux numériques (L1, L2) des cellules photoélectriques (7, 8) les signaux différentiels (D1, D2) et qui détermine la position de la marque (4) sur la bande de renforcement (3) à partir de ces derniers.

8. Dispositif selon la revendication 7, **caractérisé en ce que** la distance mesurée de centre à centre entre les cellules photoélectriques (7, 8) est inférieure à la plus petite des deux distances entre bord de marque et arête de livre non relié.

9. Dispositif selon la revendication 7 ou 8, **caractérisé en ce que** la distance, mesurée de bord à bord, entre les zones d'exploration sur les livres non reliés (1) est supérieure à la largeur de la marque (4).

10. Dispositif selon l'une quelconque des revendications 7 à 9, **caractérisé en ce que** les cellules photoélectriques (7, 8) sont séparées l'une de l'autre, de bord à bord, d'une distance de 8 mm.
